(19) Europäisches Patentamt / European Patent Office / Office européen des brevets

(11) **EP 2 667 332 A1**

(12) **DEMANDE DE BREVET EUROPEEN**

(43) Date de publication:
**27.11.2013 Bulletin 2013/48**

(21) Numéro de dépôt: **13168414.4**

(22) Date de dépôt: **20.05.2013**

(51) Int Cl.:
**G06Q 10/04** (2012.01)     **G06Q 50/08** (2012.01)
**G06Q 50/18** (2012.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **22.05.2012  FR 1254653**

(71) Demandeurs:
• **Calao Energie Renouvelable**
  **86150 Millac (FR)**

• **Chapuis, Marc**
  **92100 Boulogne Billancourt (FR)**

(72) Inventeurs:
• **Chapuis, Marc**
  **92100 Boulogne Billancourt (FR)**
• **Callaud, Maixent**
  **91370 Verrieres le Buisson (FR)**

(74) Mandataire: **Lefevre-Groboillot, David André et al**
  **Cabinet Beau de Loménie**
  **158, rue de l'Université**
  **75340 Paris Cedex 07 (FR)**

(54)    **Procédé d'optimisation des performances environnementales d'un bâtiment**

(57)    L'invention concerne un procédé d'optimisation des performances environnementales d'un bâtiment, ce procédé comportant une étape (E10) d'obtention d'une maquette numérique comportant au moins des informations géométriques sur des éléments structurels du bâtiment, des informations sémantiques définissant des dépendances entre lesdites informations géométriques, des informations d'usage du bâtiment, des informations de localisation et d'orientation du bâtiment, des informations techniques caractéristiques des éléments constituant le bâtiment; au moins une itération, chaque itération comportant une étape de calcul (E40, E50, E60) d'au moins une signature (SBC, SBCli, SG) représentative de la performance économique et/ou environnementale du bâtiment en utilisant au moins des variables prédéterminées, à partir desdites informations ; une étape (E70) d'obtention d'un cahier des charges, susceptible d'évoluer entre deux des dites itérations, contenant au moins un objectif et une contrainte portant sur lesdites variables ; et une étape (E80) d'optimisation de ladite signature dans le respect du cahier des charges en faisant varier au moins certaines des variables prédéterminées ; le procédé comportant également une étape (E100) de restitution des valeurs desdites variables prédéterminées correspondant à ladite signature optimisée pour au moins une desdites itérations.

FIG.1

**Description**

<u>ARRIERE-PLAN DE L'INVENTION</u>

La mise en oeuvre des nouvelles politiques écologiques mondiales, à l'exemple du Grenelle de l'Environnement en France, la raréfaction de l'énergie à un prix peu chère, conduisent l'industrie de la construction à une mutation rapide, obligeant celle-ci à passer d'une obligation de moyens à une obligation de résultats sur ces questions énergétiques et environnementales.

L'enjeu est non seulement de construire de nouveaux bâtiments à la fois à faible consommation d'énergie, à haute qualité environnementale, mais aussi à le faire tout en maitrisant les coûts de construction et d'exploitation. Il en va de-même pour l'ensemble du parc existant qui pour les mêmes objectifs, serait à reprendre. Compte tenu des enjeux, les décideurs de l'immobilier appelle l'Industrie de la Construction à renouveler leurs outils et méthodes. De nouveaux métiers et outils apparaissent donc, dont le métier d'Assistance à maîtrise d'ouvrage en Efficacité Energétique & Environnementale.

Caractériser cette obligation de résultat nécessite, à ces niveaux de performances, de définir très tôt, avant même les études de conception, l'essentiel des solutions constructives du projet et par conséquent de façon induite les stratégies de construction ou de rénovation, et donc de dépenses.

La présente invention vise à proposer un outil pour résoudre ce nouveau problème de cadrage préliminaire d'un projet autour de ces questions environnementales, énergétiques et de maîtrise des stratégies de dépenses.

Ces questions peuvent couvrir tant des aspects de confort induits, de coûts environnementaux, de coût de travaux, ou de coûts globaux, de consommation d'énergie, de bilan carbone. Nous les appellerons ci-après sans le préciser, questions environnementales et économiques.

Le problème que cherche à résoudre la présente invention est le suivant : comment puis-je définir pour mon projet de construction ou de rénovation à l'attention des acteurs de la construction, que ce soit pour un logement ou un bâtiment tertiaire, un ensemble de solutions de travaux traduisant de façon optimisé mon cahier des charges économique, et environnemental (appelé le cahier des charges client) ?

L'Industrie de la Construction de par son organisation, fait appel à des experts aux compétences variées très découpées les unes des autres. Ceux-ci préconisent des solutions constructives optimisées métier par métier certes, mais sans se soucier de savoir si, entre elles, elles s'optimisent pour les questions aussi intégrées et globales que lesdites questions environnementales et de coûts.

En effet, dire qu'un bâtiment ne consomme que 15 KWep/m2/an en chauffage ne suffit pas (KWep signifie KW en énergie primaire). A quel prix peut-on obtenir cette performance? Qu'en est-il des coûts de travaux, mais aussi du coût global incluant les coûts de maintenances ? Que peut-on aussi dire des aspects de conforts intérieurs, cruciaux à ce niveau de consommation d'énergie si faible ? Cette attitude, vécue au quotidien, entraine des surcoûts en cascade (surcoûts d'études de conception, de construction, puis d'exploitation, puis de consommation d'énergie); mais aussi des inconforts, et plus généralement de la dégradation de la performance environnementale.

Un premier exemple est illustré de la manière suivante. Aujourd'hui on constate des bâtiments à rénover ou devant être construits, nécessitant des équipements énergétiques pour pallier les insuffisances d'une conception bio-constructive (⇔ mobilisation de variables de type Equipements Energétiques ci-après décrites dans la présente invention) ; Les mixtes de solutions de travaux proposés par les experts, ne répondent qu'a un seul objectif du cahier des charges client (la consommation énergétique à ne pas dépasser ici dans notre exemple), mixtes économiquement non optimisés et pouvant signifier par exemple un surcoût de travaux de 3 à 15% par rapport à une solution de travaux optimisé (objectif économique du cahier des charges oublié ou insuffisamment traité). Voire dans certain cas, mixtes de travaux ne palliant pas les problèmes d'inconfort (paroi froide, temps de remise en température du bâtiment trop long, notamment), autres objectifs du cahier des charges client oubliés ou insuffisamment traités.

Un deuxième exemple est illustré de la manière suivante : aujourd'hui des mixtes de solutions de travaux proposés sont souvent incohérents entre le niveau de performance des variables bio-constructives et le niveau de performance des variables d'Implantation (enveloppe trop performante thermiquement au regard de l'orientation ou l'usage du bâtiment par exemple), conséquence directe de surcoûts constructifs (nécessité de sur-dimensionner un équipement énergétique de climatisation par exemple, de renforcer l'éclairage artificiel, notamment).

Ce flou sur la performance globale est causé par le fait que l'Industrie de la Construction se représente mal, c'est-à-dire sans identification précise ni liens de cause à effet, la réalité des travaux pertinents à effectuer au regard des contraintes et objectifs que se fixe désormais le client. La présente invention est un outil effectuant une pré-analyse large et globale des combinaisons de travaux impactant la solution. Elle restitue à l'attention de l'Industrie de la Construction un Cahier des Charges Technique Optimisé (CCTO), feuille de routes de performances des produits et systèmes devant être du moins mobilisés pour atteindre au mieux le Cahier des Charges économique et environnemental client.

OBJET ET RESUME DE L'INVENTION

Le procédé selon l'invention requière en entrée des informations et un cahier des charges. L'utilisateur choisit ensuite des variables parmi ces informations sur lesquelles il admet une plage de variation correspondant à un domaine d'étude. Le procédé permet avantageusement d'obtenir automatiquement une « meilleure performance » économique et/ou environnementale dans la limite de ce cadre de travail. L'optimisation permettant d'obtenir cette « meilleure performance » consiste à définir un critère d'arrêt, à tester plusieurs valeurs de la signature et à retenir celle ou celles qui s'approche le plus d'un ou plusieurs critères du cahier des charges.

En sortie du procédé l'utilisateur connait l'ensemble des valeurs acceptables qui permet d'obtenir la performance requise et optimal du cahier des charges.

Le fait de restituer les valeurs de variables pour plusieurs itérations présente l'intérêt de proposer plusieurs solutions, restant compatible avec le cahier des charges, aux acteurs du projet. Cela donne la possibilité au client de faire évoluer son cahier des charges entre deux itérations.

La présente invention est une passerelle entre les savoir-faire traditionnels de la construction et les nouveaux objectifs qui s'imposent au client : obligation de résultat quant à la maîtrise de la performance environnementale de son projet, mais tout en continuant à garder la maîtrise des coûts.

Ainsi de façon concrète, ces opérations permettent de déployer une véritable méthodologie, une stratégie de réduction des variables et une réduction des temps de calculs, pour la résolution du problème que se pose le client (cahier des charges) ; in fine, elle apporte à l'industrie de la construction un Cahier des Charges Technique Optimisé (CCTO) de solutions de travaux à réaliser spécifiquement pour le projet, CCTO écrit dans un langage clair, traduisant après une analyse large, globale et optimisés le cahier des charges client.

Ces avantages apportés par la présente invention, s'appliquent tant à la construction qu'à la rénovation d'un bâtiment, quel que soit la typologie de bâtiment.

Une telle démarche a pour finalité de chercher à identifier des solutions de travaux environnementalement et/ou économiquement optimisées d'un projet, et ce, en passant par une simulation combinatoire des variables influant le résultat. Cet objectif est aujourd'hui un enjeu client important, non satisfait. C'est ici l'origine de nombreux surcoûts et écarts au cahier des charges client.

L'autre avantage de cette démarche consiste en ce qu'elle permettra au client de faire varier son cahier des charges lui laissant ainsi la possibilité d'évaluer différents scénarios de projet de travaux sous différents cahiers des charges (toujours de façon robuste, large, globale et rapide), et ce, sans à avoir à reprendre les calculs de signatures.

Les variables bio-constructives sont les plus influentes sur la qualité environnementale d'un bâtiment. Elles sont « l'ADN » du bâtiment, dans le sens où elles caractérisent intrinsèquement le potentiel de performance du bâtiment au regard des objectifs environnementaux et/ou économique du cahier des charges client.

Dans un exemple particulier de réalisation, la présente invention permet de paramétrer puis de calculer de façon large, globale et avantageuse cette signature bio-constructive, dans le sens d'une capacité à anticiper à travers la signature bio-constructives, la vision économique et/ou environnementale complète du cahier des charges client.

Les variables d'implantation caractérisent la capacité du projet à s'aider des conditions naturelles du site, des usages du bâtiment et de son architecture même en termes de forme et d'organisation spatiale, compte tenu de son « ADN constructif ».

La signature bio-climatique, calculée à partir des variables d'implantation et variables bio-constructives, permet de caractériser cette capacité au regard des objectifs environnementaux et/ou économique du cahier des charges client.

Dans un exemple particulier de réalisation, la présente invention permet de paramétrer puis de calculer de façon large, globale et avantageuse cette signature bio-climatique, dans le sens d'une capacité à anticiper à travers le jeu des signatures intégrés, signature bio-constructive et bio-climatique, la vision économique et/ou environnementale complète du cahier des charges client.

Les variables d'équipement énergétique caractérisent la capacité du projet à s'aider de telles variables si la signature intermédiaire bio-climatique, calculée à partir des variables d'implantation et variables bio-constructives, est insuffisant pour trouver un mixte de solution de travaux compatible avec le cahier des charges client.

Dans un exemple particulier de réalisation, la présente invention permet de paramétrer puis calculer de façon large, globale et avantageuse une signature mathématique pertinente et la plus complète du projet, afin de trouver rapidement et efficacement des réponses de solutions de travaux optimisées et sur-mesure à chaque projet (un jeu de signatures unique par bâtiment) au regard d'un cahier des charges client.

Une telle démarche ainsi balisée dans son cheminement, présente aussi l'avantage de structurer de façon systémique les calculs mathématiques, et donc leurs efficacités, robustesses et rapidités. En particulier pour calculer la signature globale.

Dans un mode particulier de réalisation, au moins un objectif est choisi parmi :

- un coût maximum d'implémentation à ne pas dépasser, calculé à partir d'au moins une desdites variables ;

- un usage maximum d'énergie à ne pas dépasser, calculé à partir d'au moins une desdites variables ;
- un niveau de confort minimal à atteindre, calculé à partir d'au moins une desdites variables ;
- une performance environnementale minimale à atteindre, calculée à partir d'au moins une desdites variables.

Cette caractéristique permet avantageusement d'envisager des variantes du cahier des charges.

Notre invention dissocie la partie calcul des jeux de signatures, de celle de recherche d'optima de solutions de travaux sous cahier des charges client.

Les simulations numériques sont capables de modéliser des réponses toujours plus complexes sous forme de méta-modèles mathématiques. De telles simulations, généralement à plus de 10 variables, exigent des codes de simulation sophistiqués, travaillant sur des millions de réponses possibles même avec peu de variables.

Dans ce contexte, le recours à des simulateurs ou des modèles de simulations pleinement déterministes et/ou aléatoire pour quadriller systématiquement un domaine d'étude, devient illusoire pour un client s'il cherche une méta-modèle robuste, large, globale et rapide de son projet de travaux. C'est dire que sans méthode, ces simulations peuvent être très coûteux en temps de calcul (parfois plusieurs mois malgré la puissance de calcul).

Par conséquent dans un mode de réalisation, le procédé d'optimisation selon l'invention comporte une étape de construction de ladite signature, cette étape comportant :

- une étape de distribution de points maîtres dont les coordonnées représentent des valeurs de certaines des dites variables dans un domaine d'étude délimité par le cahier des charges et dans lequel les dites variables prédéterminer peuvent évoluer ;
- une étape de calcul d'une performance maître pour chacun des points maitres à partir d'une fonction choisie en fonction du dit domaine d'étude;
- et une étape de construction de la signature par modélisation des performances maîtres.

L'approche privilégiée dans ce mode de réalisation de l'invention consiste donc à définir un nombre réduit de simulations, dites simulations maitre ou encore centrées sur des points expérimentaux maitres du domaine d'étude (vecteur des variables). Cette organisation au mieux des essais, est connu de l'homme du métier sous le nom « méthode des plans d'expérience ». Ces méthodes de distribution des points maîtres, donnant les performances maîtres, sont très largement décrites dans la littérature, en particulier par « les Plans d'Expérience, de Jacques GOUPY, Revue MODULAB, 2006, Numéro 24 ».

A titre d'exemple on peut citer la méthode Hyper-cube latin, la méthode des plans de mélange, Les plans pour surfaces de réponse de type Box-Behnken et les Plans hybrides de Roquemore.

L'enjeu est donc ici le choix d'une méthode mathématique de construction des plans d'expériences, c'est-à-dire des points maîtres, la plus performante selon le type de variables et leurs domaines d'études. Il est tout à fait possible par ailleurs de traiter le domaine d'étude en utilisant localement différents types de plan d'expérience, le plus adapté localement aux variables.

Or le choix d'une telle ou telle autre méthode mathématique de construction de plan d'expérience, est considérablement facilité en choisissant une méthode mathématique de construction du plan d'expérience adapté selon le type de groupe de variables ci-avant défini. Cette approche réduit ainsi de façon considérable les temps de calcul tout en gardant la robustesse/précision des jeux de signatures (signature bio-constructive, bio-climatique et globale).

Dans un mode particulier de réalisation du procédé d'optimisation selon l'invention, les performances maîtres sont calculées par une méthode d'apprentissage choisie de sorte que la construction de ladite signature soit prédictive.

L'approche privilégiée ici par l'invention consiste à fiabiliser la représentativité des points maîtres pour l'élaboration performante des signatures associées.

Pour ce faire l'invention privilégie les méthodes d'optimisation de construction appartenant à la famille des méthodes dites de « Space Filling Design » ; ces méthodes de construction permettent de déterminer les irrégularités de surfaces de réponses et d'améliorer des méthodes d'interpolation ou d'apprentissage. Ces méthodes sont ainsi préconisées pour gagner en précision par rapport aux méthodes utilisant les tirages aléatoires ou stratifiés afin d'estimer la moyenne, la variance et la fonction de la distribution d'une réponse. De plus, ils sont très faciles et rapides à construire, même pour un nombre élevé de variables et enfin, tous niveaux de chaque variable sont représentés une unique fois. Ces méthodes sont décrites par la littérature.

Dans un mode particulier de réalisation du procédé d'optimisation, ladite étape d'optimisation de la ou des signatures est réalisée à l'aide d'une méthode stochastique de type algorithme évolutionnaires, jusqu'à atteindre un critère d'arrêt.

L'utilisation des algorithmes évolutionnaires, permet en effet de minimiser une fonction f dépendant de plusieurs variables $X_1$, $X_2$, ..., $X_p$. L'avantage de ces algorithmes d'optimisation multicritères, est qu'ils n'imposent aucune condition de régularité ou de différentiabilité de la fonction f vis à vis des variables.

Par ailleurs les algorithmes évolutionnaires, sont des méthodes stochastiques qui simulent le processus de l'évolution naturelle dans la résolution des problèmes d'optimisation. Ce sont ainsi des méthodes d'optimisation globales qui assurent la convergence vers les optima globaux malgré la présence d'optima locaux, et indépendamment de la répartition des points maîtres. En particulier, celles-ci peuvent tout à fait dépendre de variables continues ou discrètes, ce qui est notre cas.

Dans un mode particulier de réalisation de l'invention, le calcul de la ou des signatures est précédé par une étape de vérification de la complétude des informations présentes dans la maquette numérique, nécessaire au calcul de la dite ou des signatures.

L'avantage de cette étape est de compléter, si nécessaire, les informations dans la maquette numérique pour un bon déroulement des étapes suivantes. Par exemple on pourra y trouver des informations complémentaires relatives aux contraintes de positionnement des signatures, de type Projet, Métier, Règlementaires, Etat de l'Art des performances des produits et/ou systèmes, etc. Dans un mode particulier de réalisation de l'invention, le procédé comporte une étape de mise à jour d'au moins une des dites contraintes à partir des valeurs des dites variables prédéterminées correspondant à ladite signature optimisée. Autrement dit après une première itération, l'utilisateur peut choisir de modifier le cahier des charges en ajoutant des contraintes correspondant aux valeurs des valeurs obtenues après la première optimisation. On réduit ainsi le domaine d'étude puis on met de nouveau en oeuvre le procédé.

Dans un mode particulier de réalisation de l'invention, le procédé comporte en outre une étape de restitution, à l'issue de l'au moins une desdites itérations, de ladite maquette numérique modifié par les valeurs des dites variables prédéterminées correspondant à ladite signature optimisée la maquette étant au format au moins ISO-IFC, et ISO-IFD, et ISO-IDM.

Ainsi, à partir d'une maquette numérique utilisant, dans un mode de réalisation avantageux, les standards ISO-IFC 16739, ISO-IFD 12006 et ISO-IDM 29481 qui définissent des formats neutres d'échanges et d'archivages d'informations d'une maquette numérique de bâtiment, la présente étape permet avantageusement de s'inscrire dans la chaîne logistique de gestion de l'information des projets du secteur de la construction.

L'invention concerne aussi un système d'optimisation des performances environnementales d'un bâtiment, ce système comportant :

- des moyens d'obtention d'une maquette numérique comportant au moins des informations géométriques sur des éléments structurels du bâtiment, des informations sémantiques définissant des dépendances entre lesdites informations géométriques, des informations d'usage du bâtiment, des informations de localisation et d'orientation du bâtiment, des informations techniques caractéristiques des éléments constituant le bâtiment;
- des moyens pour effectuer au moins une itération, ces moyens comportant ;

  - des moyens de calcul, pour chaque itération, d'au moins une signature représentative de la performance économique et/ou environnementale du bâtiment en utilisant au moins des variables prédéterminées, à partir desdites informations ;
  - des moyens d'obtention, pour chaque itération, d'un cahier des charges, susceptible d'évoluer entre deux des dites itérations, contenant au moins un objectif et une contrainte portant sur lesdites variables ; et
  - des moyens d'optimisation, pour chaque itération, de ladite signature dans le respect du cahier des charges en faisant varier au moins certaines des variables prédéterminées ; et

- des moyens de restitution des valeurs desdites variables prédéterminées correspondant à ladite signature optimisée pour au moins une desdites itérations. Ce système présente les avantages relatifs au procédé correspondant, évoqué précédemment.

## BREVE DESCRIPTION DES DESSINS

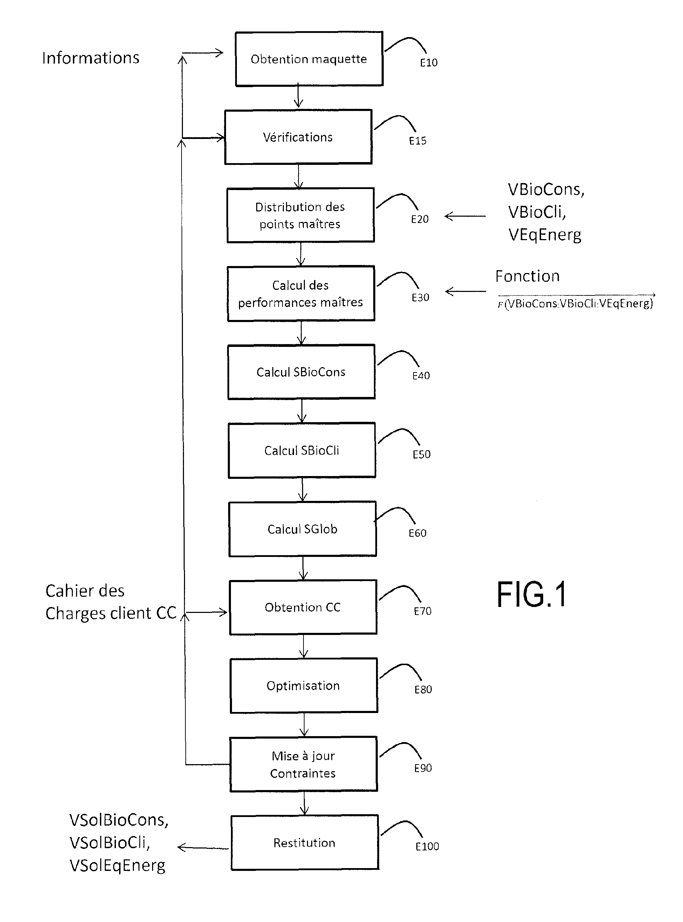

La figure 1 présente un mode de réalisation d'un procédé selon l'invention.
La figure 2 présente un mode de réalisation d'un système selon l'invention.

## DESCRIPTION DETAILLEE DE L'INVENTION

Le propriétaire (le client) d'une maison existante désire connaitre les travaux d'améliorations sur sa consommation d'énergie. Son cahier des charges client prévoit des travaux essentiellement sur les variables de la performance de l'enveloppe du bâtiment, sa ventilation ou son inertie interne, variables bio-constructives dans le contexte de l'invention. Il précise qu'il accepte éventuellement une augmentation de surface sur sa baie vitrée en façade sud créant ainsi une seule variable de type Implantation. Il envisage de-même de changer de chaudière et de système de production d'eau chaudes sanitaires, ici variables d'équipements énergétique. Pour compléter son Cahier des Charges, Le propriétaire souhaite un temps de retour en coût global de 8 ans et un montant de travaux ne devant pas dépasser les 30 000 €.

Au cours d'une étape E10 de l'invention un relevé de l'existant est donc réalisé sous la forme d'une maquette numérique du bâtiment. Un architecte réalisera, par exemple, à l'aide du logiciel SKETCHUP® (de la société GOOGLE/ TRIMBLE SketchUp®), la dite maquette numérique sous forme d'esquisse. Il sauvegarde ce modèle selon un fichier, qui peut se nommer par exemple «mon projet de départ_Esquisse.skp». D'autres logiciels de modélisation peuvent être utilisés comme VISUALARQ®, REVIT® ou ARCHICAD®.

Selon l'invention, au chargement de ce modèle est effectué un contrôle de la maquette numérique (étape E15), en vérifiant notamment la qualité et la complétude des informations, permettant de compléter la mise en données (retour à l'étape E10) au sens des réglementations, hypothèses et état de l'art connus ; par exemple, les informations suivantes :

- localisation géographique du projet;
- environnement du projet (ombres portées par d'autres bâtiments ou éléments naturels ; exposition au vent, ...),
- typologies du bâtiment (individuel, collectif, petite enfance, ...),
- des espaces (cuisine, salon, bureau, salles d'eau, ...),
- et des éléments de séparation (murs, cloisons, dalles, ...),
- des éléments de structurel ou non (façade, refend porteur, dalle, ...),
- réglementations locales applicables (RT 2005, RT 2012, RT par éléments).

A l'issue de cette étape, les informations sont sauvegardées pour tirer parti des standards en matière d'interopérabilité : standard IFC par exemple. D'autres formats de fichier, en cours de normalisation ou de diffusion, peuvent être utilisés (format Neutral Building Data Model par exemple). Ainsi de façon avantageuse selon l'invention, les informations sauvegardées peuvent être exploitées ultérieurement avec des logiciels métiers (par exemple Elodie pour les aspects environnementaux; logiciel ATTIC+ pour les aspects économiques). Ce fichier peut se nommer : «mon projet de départ_Esquisse.ifc».

Les étapes E10 et E15 permettent donc de rassembler l'ensemble des informations suffisantes aux calculs ultérieurs, y compris au regard du futur cahier des charges client (étape E70) et sa mise à jour (étape E90).

Au cours d'une **étape E20 et E30,** l'approche privilégiée par l'invention consiste à définir de façon concomitante un nombre réduit de simulations organisées autour de variables. Ces variables se définissent comme des informations dont leurs variations influences significativement le résultat associé aux objectifs et contraintes du Cahier des Charges client.

A chaque variable est assignée au moins trois valeurs choisies pour définir sa variation extrême possible et sa valeur médiane, et ce, pour le bâtiment spécifiquement considéré mais aussi compte-tenu d'une faisabilité objective (réglementation, état de l'art, ...). Ces valeurs sont aussi des informations, issues ou non du Cahier des charges client (contraintes induites) ; elles définissent le domaine d'étude de la variable.

Par exemple, pour la variable « épaisseur d'isolant au mur », appelé dans l'exemple X1, nous avons :

| | | Domaine d'étude associé à la variable X1 et valeurs de réduction mathématique associées (-1 peu performant + 1 très performant) | | |
|---|---|---|---|---|
| | | -1 | 0 | 1 |
| X1 | épaisseur d'isolant au mur | 10 cm | 15 cm | 30 cm |

Ces variables sont alors réparties en différents groupes. L'approche privilégiée par l'invention consiste à définir des plans d'expériences numériques spécifiques à chaque groupe de variable.

Ainsi suivant l'invention, et pour notre exemple, soit le tableau ci-après avec les 3 groupes de variables au moins mobilisés par l'invention :

| Type de variable selon l'invention | Nom de la VARIABLE | Définition | Domaines d'étude associés à chaque variable et valeurs de réduction mathématique associées (-1 peu performant + 1 très performant) | | |
|---|---|---|---|---|---|
| | | | **-1** | **0** | **1** |
| **VBioCli** | **X6** | % vitrage sud (/façade Sud) | 20,35% | 26,87% | 33,33% |
| | | largeur de fenêtres | 2x2 m$^2$ baie vitrée | 2x3 m$^2$ baie vitrée | 2x4 m$^2$ baie vitrée |
| **VBioCons** | **X1** | U murs (en m$^2$, C/W) | 0,37 | 0,25 | 0,13 |
| | | épaisseur d'isolant | 10 cm | 15 cm | 30 cm |
| **VBioCons** | **X2** | U toiture (en m$^2$, C/W) | 0,26 | 0,18 | 0,13 |
| | | épaisseur d'isolant | 15 cm | 20 cm | 30 cm |
| **VBioCons** | **X3** | U plancher bas (en m$^2$,C/W) | 0,37 | 0,25 | 0,13 |
| | | épaisseur d'isolant | 10 cm | 15 cm | 30 cm |
| **VBioCons** | **X4** | Inertie | Légère | Moyenne | Lourde |
| **VBioCons** | **X5** | Ponts thermiques | 44 | 22 | 0 |
| **VBioCons** | **X7** | Type de vitrage sud | double | double + argon | triple |
| **VBioCons** | **X8** | Type de vitrage N-O-E | double | double + argon | triple |
| **VBioCons** | **X9** | Ventilation | Naturelle | Simple flux | Double flux |
| **VEqEnerg** | **X10** | Générateur de chaleur | Fioul | Chauffage bois | PAC air/eau |
| **VEqEnerg** | **X11** | Production d'eau chade sanitaire | Electrique | sur chaudière bois | avec panneau solaire |
| **VEqEnerg** | **X12** | Qualité du pilotage de l'installation de chauffage | forte consommation (peu de contrôle d'usage) | consommation moyenne | Faible consommation |

Balayer avec le pas le plus fin et de la manière la plus adéquate possible un domaine d'intérêt (ensemble des domaines d'étude), nécessite d'utiliser des algorithmes d'optimisation de construction de ces plans d'expériences (méthode de distribution des points maîtres).

Il existe dans la littérature de nombreuses méthodes de distribution de ces points maîtres ; par exemple de GOUPY Jacques « pratiquer les plans d'expériences », édition Dunod ; Paris ; 560 pages (2005). Ou encore autre exemple de BOX Georges.E P., HUNTER William G., HUNTER J. Stuart «Statistics for Experimenters » deuxième édition chez John Wiley and Sons ; New-York ; 633 pages (2005).

Dans une approche privilégiée par l'invention, nous pourrions construire le plan d'expérience associés au groupe de variables VBioCli au moyen d'un plan d'expérience de type fractionnaire $2^{5-2}$, tandis que les variable de type VBioCons seraient distribué selon un plan d'expérience de type Hypercubes Latin, appartenant à la famille des méthodes dites de « Space Filling Design » ; et les variables VEqEnerg selon un plan d'expérience de type simplexe centré.

Ainsi est construit simultanément par calcul (étape E20) et par apprentissage (étape E30), à la fois un sous ensemble de points, appelés points maîtres, distribués dans l'espaces des variables retenues et valeurs possibles par le projet exemple, construisant de façon calculée et optimisée un maillage des performances maîtres réponses, support pour le calcul ultérieur des signatures décrits aux étapes E40 à E60.

Dans notre exemple la fonction F de calcul des performances maîtres pourra utiliser des logiciels de la profession ; soit par exemple pour ses composantes vectorielles $f_1$ et $f_2$ respectivement, être calculées aux moyens :

- $f_1$ pour les calculs énergétiques grâce au logiciel ARCHIWIZARD® (société RAYCREATIS®);
- $f_2$ pour les calculs de coût de travaux par le logiciel WinQUANT® (société ATTIC+ ®).

Au cours d'une **étape E40** l'invention prévoit de calculer, à partir des maillages décrient aux étapes E20 et E30, une fonction mathématique, appelée Signature dans l'invention, calculant de façon approchée le "simulateur mathématiquement équivalent" associé au groupe de variables.

La méthode des plans d'expériences, couplée à l'utilisation d'une signature, permet de ne faire qu'un nombre restreint de simulations afin d'évaluer ultérieurement et facilement les grandeurs à optimiser (besoins énergétiques souhaités, caractéristiques techniques à atteindre, coûts à ne pas dépasser dans notre exemple...).

Cette approche nécessite de calculer cette signature de façon optimisée. Il existe dans la littérature de nombreuses techniques. Nous préconisons d'utiliser, par exemple, la méthode dite de réseaux de neurones. Cette technique est décrite par " Chow TT, Zhang GQ, Lin Z, Song CL. Global optimization of absorption chiller system by genetic algorithm and neural network. Energy Build ; 2002;34(1):103-9" ; Ou encore par "Hui, S. C. M., 1998. Simulation based design tools for energy efficient buildings in Hong Kong, Hong Kong Papers in Design and Development, Vol. 1, 1998, pp. 40-46, Department of Architecture, University of Hong Kong".

A cette étape et par cette méthode, est donc calculé un type de signature dite bio-constructive. La signature dite bio-constructive est dans notre exemple, une signature des variables bio-constructives du bâti, caractéristique des performances à atteindre en application desdites variables bio-constructives sur le domaine d'intérêt associé.

Au cours d'une **étape E50** l'invention prévoit de calculer de manière similaire à l'étape E40, la signature bio-climatique du projet client.

La signature dite bio-climatique est dans notre exemple une signature des réponses des variables bio-constructives du bâti, caractéristique des performances à atteindre en application concomitante desdites informations d'implantation et desdites variables bio-constructives, et du domaine d'intérêt associé.

Au cours d'une **étape E60** l'invention prévoit de calculer de la même manière qu'à l'étape E50, la signature globale du projet client. La signature dite globale est dans notre exemple un méta-modèle des réponses des variables bio-constructives du bâti, caractéristique des performances à atteindre en application concomitante desdites variables d'implantation, d'équipements énergétiques, et desdites variables bio-constructives, et du domaine d'intérêt associé.

Dans le cadre de notre exemple, les variables X10 à X11 sont rajoutées pour calculer de la même manière qu'à l'étape E50 la signature globale.

Au cours d'une **étape E70** le cahier des charges client permet de préciser les contraintes de positions (baie vitrée au sud de 2 ml de large, largeur initiale et mini, à maxi 4 ml cf. notre exemple) et les contraintes en valeurs à atteindre (temps de retour en coût global des travaux fixé à 8 ans cf. notre exemple), ou les contraintes pratiques particulières pour lesquelles il est exclu de réaliser des travaux (pas de modification de surface de vitrage autre qu'en façade sud cf. notre exemple).

Dans l'exemple proposé la fonction qu'il est nécessaire de construire pour optimiser le coût des travaux et le temps de retour sur investissement, se présente de la façon suivante :

- $dC_{const}(X_i) = dC_{GO}(X_i) + dC_{inst}(X_i) + dC_{sol}(X_i) + dCachat\ aux(Xi) + dC_{remp}(X_i)$
- $dC_{fonc}(X_i) = dC_{chauff}(Xi) + dC_{clim}(X_i) + dC_{vent}(X_i) + dC_{fonc\ aux}(X_i)$, $dC_{global}(X_i) = dC_{const}(X_i) + dC_{fonc}(X_i)$ étant à optimiser.

Pour l'ensemble des variables $X_i$, les fonctions de coûts au $m^2$ d'un centimètre supplémentaire d'isolant par exemple, ou la fonction de coût liée au changement de technologie constructive associée, ou encore les coûts de consommation, peuvent être a calculés par le logiciel WinQUANT® et/ou encore une feuille EXCEL® support des intermédiaires de calculs.

A titre d'exemple nous donnons la fonction de coût de la variable X10 (générateur de chaleur) :

| Equipements | Rendement énergétique de l'équipement | Prix de l'énergie | Entretien annuel | Cchauff;ann($X_i$) annuel |
|---|---|---|---|---|
| **Chaudière Fioul** | $\eta g = 0{,}65$ | $P_g$ | 420 € | $\left(\frac{Bch + ECS(Xi)}{\eta g} \cdot pg + 420\right)$ |
| **Chaudière bois** | $\eta g = 0{,}95$ | $P_g = 0{:}085$ €/kWh | 120 € | $\left(\frac{Bch + ECS(Xi)}{\eta g} \cdot pg + 120\right)$ |
| **PAC air/eau** | COP = 3 | $P_g = 0{:}117$€/kWh | 210 € | $\left(\frac{Bch + ECS(Xi)}{COP} \cdot pg + 210\right)$ |

Au cours d'une **étape E80** La signature globale calculée par les étapes E40 à E60, sont directement exploitables pour l'optimisation multicritère client (optimisations économiques, énergétique cf. l'exemple).

Les méthodes déterministes de calcul d'optimisation s'appuient sur une formulation mathématique rigoureuse du problème d'optimisation et recherchent un optimum mathématique. Mais dans la plupart des cas, l'application de ces méthodes aboutit à la détermination de plusieurs optimums locaux sans identifier les optimums globaux. L'approche privilégiée par l'invention consiste à déterminer des optimums globaux, et il est nécessaire donc de passer par des méthodes d'optimisation de type stochastiques.

Parmi ces méthodes nous pouvons citer la méthode de la colonie de fourmis, du recuit simulé ou encore des algorithmes génétiques. Cette dernière famille a été et est la plus utilisée pour la résolution de problèmes d'optimisation multicritères dans le secteur du bâtiment (cf. J. Coffey, thèse LEPTIA 2009, « Analyse Multicritère des stratégies de ventilation en maison individuelle » ; S. ATTIA, 2012, « Optimisation for Zero Energy Building Design: Interviews with Twenty Eight International Experts, Architecture et Climat », Louvain La Neuve, Université catholique de Louvain ; Es Tresidder 1, Yi Zhang 1 and Alexander I. J. Forrester , 12th Conference of international Proceeding of building simulation, 2011, "Optimisation of low-Energy Building Design using Surrogate-Models").

Ces méthodes des Algorithmes Génétiques (GA) sont inspirées de la théorie de sélection naturelle de Darwin et furent d'abord développées par Holland dans les années 1970. Depuis, de nombreux GA ont été mis au point pour l'optimisation. Nous pouvons citer sur la base d'un recensement fait par Pernodet-Chantrelle en 2010, les différents GA suivant :

- SPEA (Strengh Pareto Evolutionary Algorithm) ;
- MOGA (Multiple Objective Genetic Algorithm) ;
- NPGA (Nicked Pareto Genetic Algorithm) ;
- MOMGA (Multi Objective and Messy Genetic Algorithm).
- WARGA (Weighted Average Ranking Genetic Algoithm) ;
- NGSA-II (Non-dominated-and-crowding Sorting Genetic Algorithm II) ;
- NSGA (Non-dominated Sorting Genetic Algorithm) ;
- VEGA (Vector Evaluated Genetic Algorithm).

L'optimisation multicritère client est avantageusement réalisée dans notre exemple à l'aide d'un algorithme d'optimisation des calculs de type Algorithme Génétique. Le critère d'arrêt de l'algorithme génétique peut être dans notre exemple la convergence de l'ensemble des vecteurs solutions satisfaisants au cahier des charges client, vers un même ensemble optimal de Pareto, et s'inscrivant dans un nombre d'itérations (générations) fixées arbitrairement à 5 pour l'exemple.

Dans le cadre de notre exemple, après avoir évalué les deux types de surcoûts $dC_{const}(X_i)$ et $dC_{fonc}(X_i)$, il s'agira d'optimiser conformément au cahier des charges client le surcoût total $dC_{tot}(X_i) = dC_{const}(X_i) + dC_{fonc}(X_i)$ où les paramètres $X_i$ évoluent dans l'intervalle [-1; 1], pour un investissement de 30 K€ et un temps de retour de 8 ans sur les coûts de fonctionnement $dC_{fonc}(X_i)$.

Le processus d'optimisation, étape E80, peut alors commencer. On crée aléatoirement une population initiale de N individus sur les 12 variables. On suit ensuite plusieurs phases:

● évaluation : on attribue à chaque individu une valeur correspondant à son adaptation au problème (fitness), par exemple si pour deux individus X et Y, on a f(X) ≤ f(Y) et que l'on veuille minimiser f alors X sera plus adapté au problème que Y.

● sélection : on tire au sort N=2 couples d'individus avec pour chaque individu une probabilité d'être tiré proportionnelle à sa valeur d'adaptation croisement : chaque couple donne deux individus fils en échangeant une partie de leur chaîne de gènes (cross-over)

● mutation : pour chaque nouvel individu, on tire aléatoirement avec une certaine probabilité fixée un gène que l'on remplace par une valeur aléatoire.

L'ensemble de ces nouveaux individus forme alors la nouvelle génération, et on réitère le processus.

Au bout de 5 mutations, le meilleur individu de chaque génération est censé converger vers l'optimum du problème.

Dans la pratique, l'objet de notre démarche d'optimisation consiste à fixer un cas de référence correspondant au cas où les 12 facteurs sont au niveau -1 (l'état existant de notre maison dans l'exemple). On évalue ensuite le surcoût de construction $dC_{const}(X_i) = C_{const}(X_i) - C^*_{const.}$, où Cconst(Xi) est le coût de construction pour les différents paramètres $X_i$ et $C^*_{const}$ le coût de construction dans le cas de référence. Le fichier informatique de la maquette numérique associé au projet de référence, est ici appelé et enregistré, par exemple, *«mon projet de départ_ref_Esquisse.ifc»*. Il peut avantageusement représenter l'état existant du bâtiment.

De la même façon, on évalue le surcoût de fonctionnement de l'habitation sur a années :

$$dC_{fonc}(X_i) = C_{fonc}(X_i) - C^*_{fonc} = E(X_i) \cdot a,$$

en reprenant les mêmes notations et où $E(X_i)$ correspond aux économies réalisées chaque année par rapport au cas de référence.

Dans notre cas nous recherchons la valeur a= $a_{TRI}$ = 8 ans pour un surcoût 30 K€ investie, on a donc :

$$dC_{const}(X_i) + E(X_i) \cdot a_{TRI} = 0 \quad \text{et } TRI = -\frac{ln\left(1+\frac{C_{const}(X_i)}{E(X_i)}\right)}{ln(1+r_e)} \text{ avec } r_e = \frac{\frac{f-1}{f+i}-e}{1+e}$$

f étant le taux d'intérêt nominal de l'argent et e le taux d'inflation annuel du coût de l'énergie.

Les calculs de l'algorithme génétique ainsi déroulé sur la signature globale, isolent les variables $(X_i)_{solution}$, pour dans le cadre de notre exemple, un résultat suivant :

| dC_const | dC_fonc | TRI | Bch |
|---|---|---|---|
| 30 060 € | -3 721 € | 8,0 ans | 21 kWh/m²/an |

L'ensemble des valeurs (Xi)_solutions n'est pas unique.

Au cours d'une **étape E90** le client peut décider arbitrairement mettre à jour ces contraintes pour étudier en particulier une solution de (Xi) ou encore réduire le domaine d'étude par exemple. Le processus renvoi alors à l'étape E70 comme nouveau cahier des charges client, et il se refait une recherche d'optimisation aux regards de ce nouveau cahier des charges client, sur la base de la signature globale déjà calculée.

A une **étape E100** le client isole une ou plusieurs solutions de (Xi) lui convenant. Le fichier informatique de la maquette numérique associé à chaque ensemble de variables $(X_i)_{solution\ j}$, est ici enregistrée et appelée, par exemple, *«mon projet de départ_solution_j_Esquisse.ifc»*.

Pour un $(X_i)_{solution\ j}$, la solution constructive associée est alors immédiatement décrite, par exemple, par le logiciel WinQuant® en lisant le fichier *«mon projet de départ_solution_j_Esquisse,ifc»*, réponse constructive recherchée par le client au regard de son cahier des charges. Il s'agit ici du cahier de charges technique optimisé au sens de l'invention, document de travail sur lequel les experts démarreront leurs études dont la sélection de produits et système d'industriels correspondants.

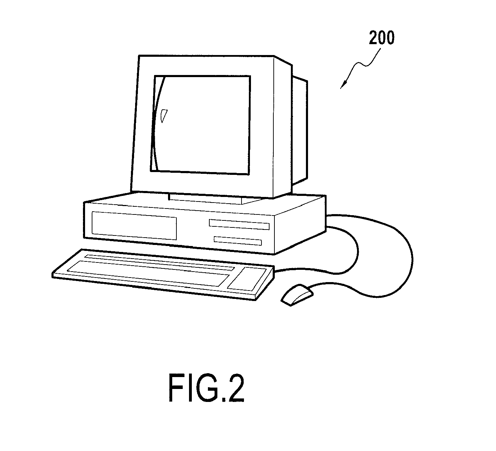

En figure 2, on a représenté un mode de réalisation d'un système d'optimisation des performances environnementales d'un bâtiment selon l'invention. Il s'agit d'un dispositif électronique, par exemple un micro-ordinateur 200 disposant d'une mémoire, d'un microprocesseur et d'une interface utilisateur, pour l'obtention d'une maquette numérique, les itérations comprenant les étapes de calcul, d'obtention d'un cahier des charges, l'optimisation de la signature, et la restitution des valeurs pour la signature optimisée. D'autres modes de réalisation sont possibles, en utilisant des technologies de type *« cloud computing »* ou machines virtuelles. On peut aussi utiliser des clients légers, des tablettes ou un téléphone intelligent ou encore des objets communicants multiprocesseurs avec cartes graphiques accélérées. En particulier, on peut utiliser les techniques de GPU computing, ou calcul par les processeurs des cartes graphiques. On peut notamment associer le « *GPU computing »* et le « *Cloud computing »*.

L'invention a été décrite en relation avec un mode de réalisation particulier, mais elle s'étend à toutes les variantes dans le cadre de la portée des revendications.

**Revendications**

1. Procédé d'optimisation des performances environnementales d'un bâtiment, ce procédé comportant :

- une étape (E10) d'obtention d'une maquette numérique comportant au moins des informations géométriques sur des éléments structurels du bâtiment, des informations sémantiques définissant des dépendances entre lesdites informations géométriques, des informations d'usage du bâtiment, des informations de localisation et d'orientation du bâtiment, des informations techniques caractéristiques des éléments constituant le bâtiment;
- au moins une itération, chaque itération comportant ;

- une étape de calcul (E40, E50, E60) d'au moins une signature (SBC, SBCli, SG) représentative de la performance économique et/ou environnementale du bâtiment en utilisant au moins des variables prédéterminées, à partir de ladite maquette numérique;
- une étape (E70) d'obtention, d'un utilisateur, d'un cahier des charges, susceptible d'évoluer entre deux des dites itérations, contenant au moins un objectif et une contrainte portant sur lesdites variables ; et
- une étape (E80) d'optimisation de ladite signature dans le respect du cahier des charges en faisant varier au moins certaines des variables prédéterminées ; et

- une étape (E100) de restitution audit utilisateur des valeurs desdites variables prédéterminées correspondant à ladite signature optimisée pour au moins une desdites itérations.

2. Procédé d'optimisation selon la revendication 1, **caractérisé en ce que** ladite au moins une signature est une signature dite « bio-constructive » représentative des variations concomitantes d'au moins deux variables dites « bio-constructives », chaque variable bio-constructive étant représentative d'une caractéristique choisie parmi :

- les performances de l'enveloppe du bâtiment ;
- la ventilation du bâtiment ;
- l'autonomie lumineuse du bâtiment ; et
- l'inertie thermique du bâtiment.

3. Procédé d'optimisation selon la revendication 2, **caractérisé en ce que** ladite au moins une signature est une signature dite « bio-climatique» représentative des variations concomitantes de deux groupes de variables, le premier groupe de variables étant constitué par lesdites variables bio-constructives, le deuxième groupe de variables comportant des variables dites « d'implantations », chaque variable d'implantation étant représentative d'une caractéristique choisie parmi :

- une caractéristique géométrique ou volumique du bâtiment ; ou
- une condition d'usage du bâtiment.

4. Procédé d'optimisation selon la revendication 3, **caractérisé en ce que** ladite au moins une signature est une signature dite « globale» représentative des variations concomitantes de trois groupes de variables, le premier groupe de variables étant constitué par lesdites variables bio-constructives, le deuxième groupe de variables étant constitué par lesdites variables d'implantation, le troisième groupe de variables comportant des variables dites « d'équipements énergétiques», chaque variable d'équipement énergétique étant représentative d'une caractéristique choisie parmi :

- une caractéristique d'un équipement de production ou de stockage d'énergie thermique ; ou
- un paramètre de pilotage d'un desdits équipements.

5. Procédé d'optimisation selon l'une quelconque des revendications 1 à 4, **caractérisé en ce que** ledit au moins un objectif est choisi parmi :

- un coût maximum d'implémentation à ne pas dépasser, calculé à partir d'au moins une desdites variables ;
- un usage maximum d'énergie à ne pas dépasser, calculé à partir d'au moins une desdites variables ;
- un niveau de confort minimal à atteindre, calculé à partir d'au moins une desdites variables ;
- une performance environnementale minimale à atteindre, calculée à partir d'au moins une desdites variables.

6. Procédé d'optimisation selon l'une quelconque des revendications 1 à 5 **caractérisé en ce que** ladite contrainte consiste à figer au moins une desdites variables.

7. Procédé d'optimisation selon l'une quelconque des revendications précédentes **caractérisé en ce qu'**il comporte une étape de construction de ladite signature, cette étape comportant :

- une étape (E20) de distribution de points maîtres dont les coordonnées représentent des valeurs de certaines des dites variables dans un domaine d'étude délimité par le cahier des charges et dans lequel les dites variables prédéterminer peuvent évoluer ;
- une étape (E30) de calcul d'une performance maître pour chacun des points maitres à partir d'une fonction choisie en fonction du dit domaine d'étude;
- et une étape (E40, E50 E60) de construction de la signature par modélisation des performances maîtres ;

8. Procédé d'optimisation selon la revendication 7, **caractérisé en ce que** lesdites performances maitres sont calculées (E30) par une méthode d'apprentissage choisie de sorte que la construction de ladite signature soit prédictive.

9. Procédé d'optimisation selon l'une quelconque des revendications 1 à 8, **caractérisé en ce que** ladite étape d'optimisation (E80) est réalisée à l'aide d'une méthode stochastique de type algorithme évolutionnaires, jusqu'à atteindre un critère d'arrêt.

10. Procédé d'optimisation selon l'une des revendications précédentes, **caractérisé en ce qu'**il comporte une étape (E15) de vérification de la complétude des informations présentes dans la maquette numérique, nécessaire au calcul de la dite signature.

11. Procédé d'optimisation selon l'une quelconque des revendications précédentes, **caractérisé en ce qu'**il comporte une étape (E90) de mise à jour d'au moins une des dites contraintes à partir des valeurs des dites variables prédéterminées correspondant à ladite signature optimisée.

12. Procédé d'optimisation selon l'une quelconque des revendications précédentes, **caractérisé en ce que** comporte en outre une étape (E100) de restitution, à l'issue de l'au moins une desdites itérations, de ladite maquette numérique modifié par les valeurs des dites variables prédéterminées correspondant à ladite signature optimisée la maquette étant au format au moins ISO-IFC, et ISO-IFD, et ISO-IDM.

13. Système (200) d'optimisation des performances environnementales d'un bâtiment, ce système comportant :

- des moyens d'obtention d'une maquette numérique comportant au moins des informations géométriques sur des éléments structurels du bâtiment, des informations sémantiques définissant des dépendances entre lesdites informations géométriques, des informations d'usage du bâtiment, des informations de localisation et d'orientation du bâtiment, des informations techniques caractéristiques des éléments constituant le bâtiment;
- des moyens pour effectuer au moins une itération, ces moyens comportant ;

  - des moyens de calcul, pour chaque itération, d'au moins une signature (SBC, SBCli, SG) représentative de la performance économique et/ou environnementale du bâtiment en utilisant au moins des variables prédéterminées, à partir de ladite maquette numérique;
  - des moyens d'obtention d'un utilisateur, pour chaque itération, d'un cahier des charges, susceptible d'évoluer entre deux des dites itérations, contenant au moins un objectif et une contrainte portant sur lesdites variables ; et
  - des moyens d'optimisation, pour chaque itération, de ladite signature dans le respect du cahier des charges en faisant varier au moins certaines des variables prédéterminées ; et

- des moyens de restitution audit utilisateur des valeurs desdites variables prédéterminées correspondant à ladite signature optimisée pour au moins une desdites itérations.

Informations

Obtention maquette — E10

Vérifications — E15

Distribution des points maîtres — E20 ← VBioCons, VBioCli, VEqEnerg

Calcul des performances maîtres — E30 ← Fonction $F(VBioCons;VBioCli;VEqEnerg)$

Calcul SBioCons — E40

Calcul SBioCli — E50

Calcul SGlob — E60

Cahier des Charges client CC → Obtention CC — E70

Optimisation — E80

Mise à jour Contraintes — E90

VSolBioCons, VSolBioCli, VSolEqEnerg ← Restitution — E100

FIG.1

FIG.2

Europäisches
Patentamt

European
Patent Office

Office européen
des brevets

**RAPPORT DE RECHERCHE EUROPEENNE**

Numéro de la demande

EP 13 16 8414

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JACQUES GOUPY: "Les plans d'experiences", 1 juillet 2006 (2006-07-01), REVUE MODULAD,, PAGE(S) 74 - 116, XP002492099, * le document en entier * | 1-13 | INV. G06Q10/04 G06Q50/08 G06Q50/18 |
| A | Sam C.M. Hui: "EFFECTIVE USE OF BUILDING ENERGY SIMULATION FOR ENHANCING BUILDING ENERGY CODES", Eighth International IBPSA Conference, 11 août 2003 (2003-08-11), pages 523-530, XP055046474, Eindhoven, NL Extrait de l'Internet: URL:http://www.ibpsa.org/proceedings/BS2003/BS03_0523_530.pdf [extrait le 2012-12-04] * le document en entier * | 1-13 | |
| A | T.T. CHOW ET AL: "Global optimization of absorption chiller system by genetic algorithm and neural network", ENERGY AND BUILDINGS, vol. 34, no. 1, 1 janvier 2002 (2002-01-01), pages 103-109, XP055046470, ISSN: 0378-7788, DOI: 10.1016/S0378-7788(01)00085-8 * le document en entier * | 1-13 | |

DOMAINES TECHNIQUES RECHERCHES (IPC)

G06Q

-/--

Le présent rapport a été établi pour toutes les revendications

| Lieu de la recherche | Date d'achèvement de la recherche | Examinateur |
|---|---|---|
| Munich | 20 juin 2013 | Dedek, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 13 16 8414

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Es Tresidder ET AL: "OPTIMISATION OF LOW-ENERGY BUILDING DESIGN USING SURROGATE MODELS", , 14 novembre 2011 (2011-11-14), pages 1012-1016, XP055046480, Sydney Extrait de l'Internet: URL:http://www.ibpsa.org/proceedings/BS2011/P_1374.pdf [extrait le 2012-12-04] * le document en entier * ----- | 1-13 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 20 juin 2013 | Dedek, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JACQUES GOUPY.** les Plans d'Expérience. *Revue MODULAB,* 2006
- **GOUPY JACQUES.** pratiquer les plans d'expériences. 2005, 560
- **BOX GEORGES.E P. ; HUNTER WILLIAM G. ; HUNTER J. STUART.** Statistics for Experimenters. John Wiley and Sons, 2005, 633
- **CHOW TT ; ZHANG GQ ; LIN Z ; SONG CL.** Global optimization of absorption chiller system by genetic algorithm and neural network. *Energy Build,* 2002, vol. 34 (1), 103-9
- Simulation based design tools for energy efficient buildings in Hong Kong. **HUI, S. C. M.** Hong Kong Papers in Design and Development. Department of Architecture, University of Hong Kong, 1998, vol. 1, 40-46

- **J. COFFEY.** Analyse Multicritère des stratégies de ventilation en maison individuelle. *thèse LEPTIA,* 2009
- **S. ATTIA.** Optimisation for Zero Energy Building Design: Interviews with Twenty Eight International Experts. *Architecture et Climat,* 2012
- **ES TRESIDDER ; YI ZHANG ; ALEXANDER I. J. FORRESTER.** Optimisation of low-Energy Building Design using Surrogate-Models. *12th Conference of international Proceeding of building simulation,* 2011